Europäisches Patentamt

European Patent Office

Office européen des brevets

(19)

(11) Veröffentlichungsnummer: **0 097 877**
**B1**

(12) **EUROPÄISCHE PATENTSCHRIFT**

(45) Veröffentlichungstag der Patentschrift:
**22.04.87**

(51) Int. Cl.⁴: **A 61 C 17/04**

(21) Anmeldenummer: **83105874.8**

(22) Anmeldetag: **15.06.83**

(54) **Speivorrichtung für zahnärztliche Zwecke.**

(30) Priorität: **30.06.82 DE 3224488**

(43) Veröffentlichungstag der Anmeldung:
**11.01.84 Patentblatt 84/2**

(45) Bekanntmachung des Hinweises auf die Patenterteilung:
**22.04.87 Patentblatt 87/17**

(84) Benannte Vertragsstaaten:
**DE FR GB IT**

(56) Entgegenhaltungen:
**GB - A - 939 113**
**US - A - 2 848 721**

(73) Patentinhaber: **Siemens Aktiengesellschaft Berlin und München, Wittelsbacherplatz 2, D-8000 München 2 (DE)**

(72) Erfinder: **Kratochwilla, Hans Michael, Ziegelhüttenstrasse 6, D-6143 Lorsch (DE)**

ACTORUM AG

**Beschreibung**

Die Erfindung bezieht sich auf eine Speivorrichtung für zahnärztliche Zwecke, mit einer Speischale, die eine durch einen flachen Kegel bestimmte Bodenfläche aufweist, an der sich Seitenwandungen anschliessen, die mit einem oberen Rand abschliessen, der in einer zur Benutzerseite hin geneigt angeordneten Ebene liegt, und die im Bereich der Seitenwandungen einen Spülwasserzulauf und bodenseitig eine im Bereich der Kegelspitze angeordnete, in einen Abflusskanal mündende Ablauföffnung enthält.

Bei einer bekannten solchen Einrichtung (Siemens-Prospekt M-D 10/1268 «Für ihre Helferin: Wassereinheit SIRO 1 oder SIRO 2») verlaufen die Seitenwandungen im wesentlichen senkrecht und in Randnähe leicht nach innen. Der obere Rand ist nach innen gezogen und bildet so einen Überfallrand, mit dem verhindert werden soll, dass beispielsweise bei zu starker Spülung Spülwasser über den Rand spritzen kann. Ein solcher Überfallrand bildet zwar von aussen nicht sichtbare, vom hygienischen Standpunkt jedoch nicht akzeptable Schmutzränder.

Bei einer anderen bekannten Speivorrichtung (DE-U 1 808 006), bei der der obere Rand nicht in einer leicht geneigten, sondern in einer horizontalen Ebene liegt, sind die Seitenwandungen durch einen auf die Spitze gestellten Kegel bestimmt, d.h. die Seitenwandungen verlaufen von der Bodenfläche zum oberen Rand schräg nach aussen. Auch bei dieser bekannten Speivorrichtung bildet der obere Rand einen Überfallrand. Der Spülwasserzulauf liegt, wie auch bei der erstgenannten Vorrichtung, unterhalb des Überfallrandes.

Solche, mit einem nach innen gezogenen Überfallrand versehene Speischalen entsprechen aus heutiger Sicht nicht mehr den Anforderungen an Hygiene. Hinzu kommt, dass bei beiden bekannten Vorrichtungen, um die Wandungen der Speischale sauber zu halten, eine verhältnismässig starke Spülung notwendig ist, die einerseits einen erhöhten Spülwasserverbrauch zur Folge hat und andererseits trotz des vorhandenen Überfallrandes zu einem Überschwappen des Spülwassers neigt. Dieses Überschwappen tritt besonders an dem zur Benutzerseite hin, aus Gründen einer patientenfreundlicheren Bedienung der Speischale, niedriger gelegenen Speischalenrand auf.

Der im Anspruch 1 angegebenen Erfindung liegt die Aufgabe zugrunde, eine Speivorrichtung der eingangs genannten Gattung anzugeben, die den Hygieneanforderungen besser entspricht, demnach keinen nach innen gezogenen Überfallrand aufweist, mit der aber trotz Fehlens eines solchen Überfallrandes ein Spülen der Speischale bei geringerem Spülwasserverbrauch und unter Vermeidung eines Überschwappens des Spülwassers erzielt werden kann.

Vorteilhafte Ausgestaltungen und Weiterbildungen der Erfindung sind in den abhängigen Ansprüchen enthalten.

Ein Ausführungsbeispiel der Erfindung wird anhand der Zeichnung näher erläutert. Es zeigen:

Fig. 1 eine Speivorrichtung nach der Erfindung in einer schaubildlichen Darstellung,
Fig. 2 einen Schnitt entlang der Linie II/II in Fig. 1,
Fig. 3 einen Schnitt entlang der Linie III/III in Fig. 1,
Fig. 4 einen Schnitt entlang der Linie IV/IV in Fig. 1.

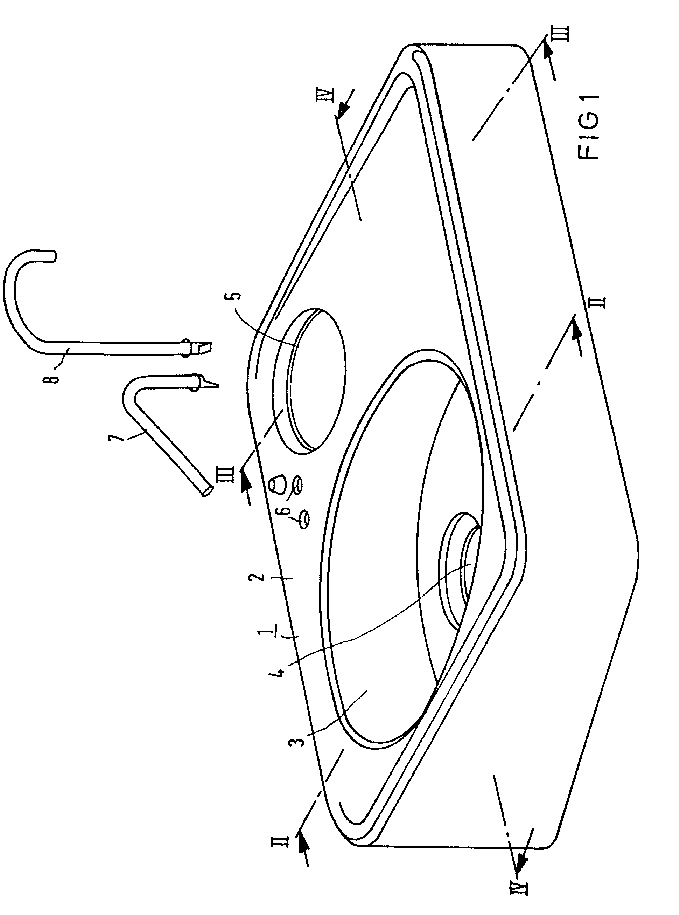

Die Figur 1 zeigt in einer schaubildlichen Darstellung eine Speivorrichtung mit einem in der Draufsicht rechteckigen und an den Kanten stark abgerundeten Gehäuse 1, dessen Deckfläche 2 zur Benutzerseite hin leicht geneigt angeordnet ist. Im Gehäuse 1 integriert ist eine schalenförmige Vertiefung 3 mit einer Ablauföffnung 4 sowie eine Vertiefung 5, welche zum Aufsetzen eines in der Zeichnung nicht dargestellten Mundglases dient. Mit 6 sind zwei Bohrungen bezeichnet, in die Einlaufrohre 7 und 8 einsteckbar sind; das Einlaufrohr 7 dient zur Zufuhr von Spülwasser in die schalenförmige Vertiefung 3, das Einlaufrohr 8 zur Füllung des in die Vertiefung 5 plazierbaren Mundglases.

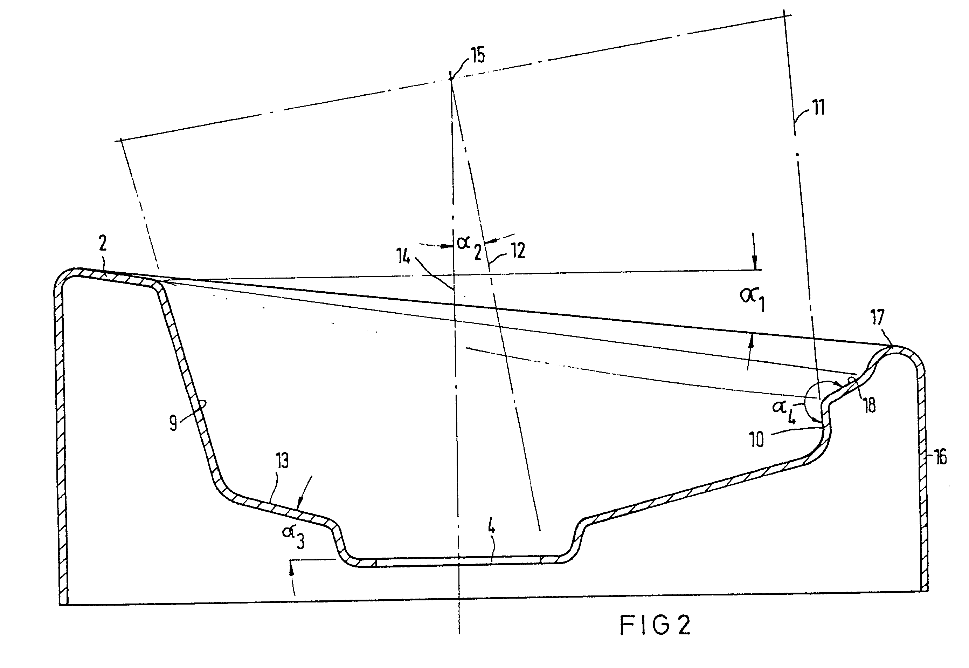

Aus Fig. 2, die einen Schnitt entlang der Linie II/II in Fig. 1 zeigt, ist ersichtlich, dass die Deckfläche 2 zur Benutzerseite hin (in Betrachtung der Figur nach rechts) unter einem Winkel $\alpha_1$ von etwa 10 bis 15° zur Horizontalen geneigt verläuft. Die Seitenwandungen 9, 10 der Speischale werden gebildet durch einen in der Figur strichpunktiert angedeuteten Zylinder 11, dessen Rotationsachse 12 unter einem Winkel $\alpha_2$ von 10° gegenüber der Senkrechten geneigt angeordnet ist, und zwar von der Benutzerseite weg gerichtet. Die Bodenwandung 13 verläuft unter einem Winkel $\alpha_3$ von etwa 15° zur Horizontalen. Diese Bodenfläche wird gebildet durch einen Kegel, dessen Achse 14 senkrecht verläuft und die Zylinderachse 12 in einem oberhalb der Speischale liegenden Punkt 15 unter dem obengenannten Winkel $\alpha_2$ schneidet.

Die Deckfläche 2 sowie Seiten- und Bodenwandungen 9, 10 und 13 haben weiche Übergänge mit ausreichend grossen Radien, die ein leichtes Reinigen der Flächen ermöglichen.

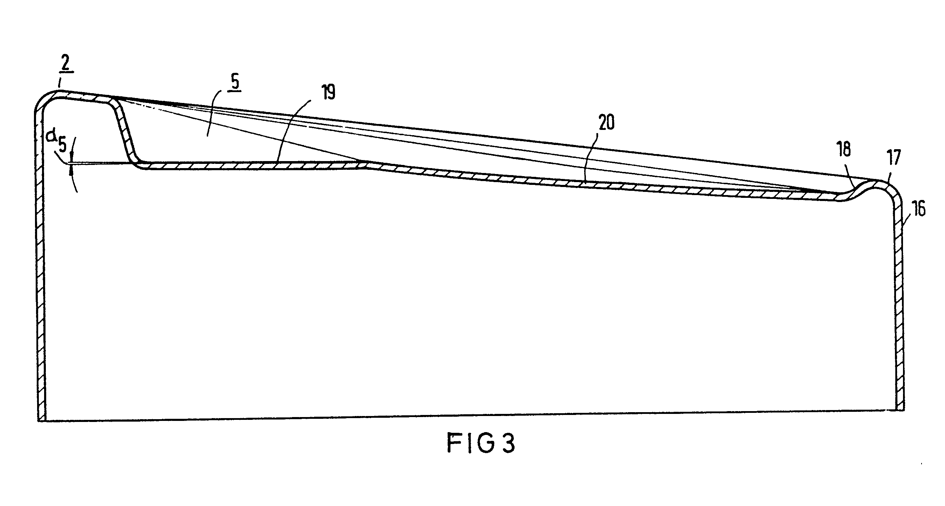

Im Bereich der Benutzerseite ist die Speischale mit einer in die äussere Begrenzungswand 16 übergehenden Wulst 17 versehen, die in einen unter einem stumpfen Winkel $\alpha_4$ zur Innenwandung 10 verlaufenden Flächenabschnitt 18 übergeht. Dieser Flächenabschnitt 18 geht ausserhalb der Speischale 3 in die Deckfläche 2 bzw. 20 bündig über (s. hierzu auch Fig. 3).

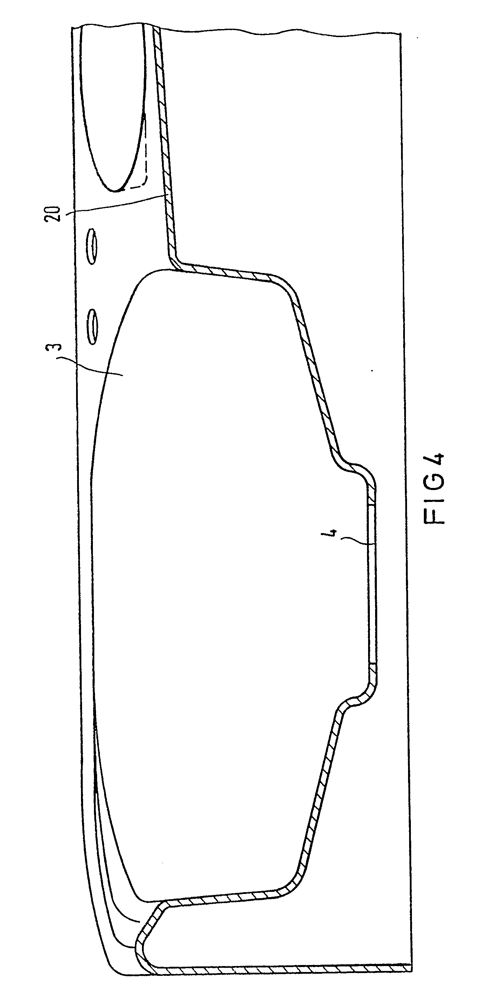

Die Vertiefung 5 weist eine unter einem Winkel $\alpha_5$ von etwa 1 bis 2° leicht geneigte Standfläche 19 auf (Fig. 3), die höher liegt als die niedrigste Oberkante des Schalenrandes 17 und in einen Flächenabschnitt 20 der Deckfläche 2 übergeht. Dieser Flächenabschnitt 20 wiederum verläuft, wie aus Fig. 4 zu entnehmen ist, zur Speischale 3 hin geneigt, so dass aus dem Mundglas überlaufendes Wasser im Bereich der Vertiefung 5 über den Flächenabschnitt 20 in die Speischale 3 ein- und von dort über die Ablauföffnung 4 in einen nicht dargestellten Abflusskanal abfliessen kann.

Die Ablauföffnung 4 liegt, wie aus den Fig. 2 und 4 hervorgeht, aussermittig der Speischalenanordnung. Der Einlauf des Spülwassers erfolgt, wie bereits erwähnt, über das Rohr 7, welches tangential und schräg nach unten weisend unter einem Winkel von etwa 30° zur Waagerechten auf die Seiten- bzw. Bodenwandung gerichtet ist. Aufgrund der erläuterten schrägen Boden- und Seitenwandungen ergibt sich ein spiralförmiger Verlauf des Spülwassers mit einer Einlaufstelle, die der breitesten Spülfläche gegenüberliegt und einer Ablauföffnung, die am Ende der Spirale des Spülwasserverlaufs liegt, wodurch das Spülwasser die Flächen ausreichend bespült und optimal ohne Wirbelbildung abfliessen kann.

## Patentansprüche

1. Speivorrichtung für zahnärztliche Zwecke, mit einer Speischale, die eine durch einen flachen Kegel bestimmte Bodenfläche (13) aufweist, an der sich Seitenwandungen (9, 10) anschliessen, die mit einem oberen Rand (2, 17) abschliessen, der in einer zur Benutzerseite hin geneigt angeordneten Ebene liegt, und die im Bereich der Seitenwandungen (9, 10) einen Spülwasserzulauf (7) und bodenseitig eine im Bereich der Kegelspitze angeordnete, in einen Abflusskanal mündende Ablauföffnung (4) enthält, dadurch gekennzeichnet, dass die Seitenwandungen (9, 10) durch einen schräg gestellten Zylinder (11) gebildet sind, dessen Achse (12) in bezug auf die Vertikale von der Benutzerseite weg geneigt und in einem kleinen spitzen Winkel ($\alpha_2$) zur Kegelachse der Bodenfläche (13) angeordnet ist, und dass die Seitenwandungen (9, 10) bündig übergehen in eine den Rand bildende Deckfläche (2).

2. Speivorrichtung nach Anspruch 1, dadurch gekennzeichnet, dass die Ablauföffnung (4) aussermittig der Schalenbodenfläche (13) angeordnet ist und der Spülwasserzulauf (7) tangential und schräg nach unten gerichtet, vorzugsweise unter einem Winkel von 30° zur Horizontalen, an derjenigen Seite der Speischale (3) angeordnet ist, die dem Teil der Bodenfläche (13) mit der grössten Breite gegenüberliegt.

3. Speivorrichtung nach Anspruch 1 oder 2, dadurch gekennzeichnet, dass die Schale (3) in einem eine Standfläche (19) für ein Mundglas aufweisenden Gehäuse (1) integriert angeordnet ist.

4. Speivorrichtung nach Anspruch 3, dadurch gekennzeichnet, dass das Gehäuse (1) schräge, in die Schale (3) mündende Ablaufflächen (20) aufweist.

5. Speivorrichtung nach Anspruch 3 oder 4, dadurch gekennzeichnet, dass die Standfläche (19) für das Mundglas im Gehäuse (1) leicht geneigt und höher angeordnet ist als die niedrigste Oberkante des Schalenrandes (17) und in eine in die Schale (3) mündende Ablauffläche (20) übergeht.

6. Speivorrichtung nach einem der Ansprüche 3 bis 5, dadurch gekennzeichnet, dass das Gehäuse (1) an der der Benutzerseite zugewandten Seite einen über die Breite des Gehäuses verlaufenden Überlaufrand (17) aufweist, der im Bereich der Schale (3) den Schalenrand bildet und an der Benutzerseite mit der Aussenwandung (16) des Gehäuses (1) abschliesst.

7. Speivorrichtung nach Anspruch 6, dadurch gekennzeichnet, dass das Gehäuse (1) einen rechteckigen Grundriss aufweist und die Kanten stark abgerundet sind.

8. Speivorrichtung nach einem der Ansprüche 3 bis 7, dadurch gekennzeichnet, dass an der Deckfläche (2) des Gehäuses (1) zwei Bohrungen (6) für steckbare Einlaufrohre (7, 8) einerseits für die Schalenspülung und andererseits die Mundglasfüllung vorgesehen sind.

## Claims

1. A saliva fixture for dental purposes, comprising a saliva bowl which has a flattened conical base area (13) joined by lateral walls (9, 10) which terminate with an upper edge (2, 17) which is arranged in a plane inclined towards the side of the user, and which saliva bowl comprises a rinsing water inlet (7) in the region of the lateral walls (9, 10) and a discharge opening (4) which is arranged on the base in the region of the cone point and opens into a discharge channel, characterised in that the lateral walls (9, 10) are formed by a slantingly-arranged cylinder (11), whose axis (12) is tilted away from the side of the user in relation to the vertical and arranged at a small acute angle ($\alpha2$) to the cone axis of the base area (13), and that the lateral walls (9, 10) are flush with a cover surface (2) which forms the edge.

2. A saliva fixture as claimed in claim 1, characterised in that the discharge opening (4) is eccentrically arranged in relation to the base area (13) of the bowl and the rinsing water inlet (7) which is tangentially directed and inclined towards the base, preferably at an angle of 30° to the horizontal, is arranged on the side of the saliva bowl (3) which lies opposite the part of the base area (13) having the greater width.

3. A saliva fixture as claimed in claim 1 or 2, characterised in that the bowl (3) is integrated into a housing (1) which has a support (19) for a drinking glass.

4. A saliva fixture as claimed in claim 3, characterised in that the housing (1) has inclined draining surfaces (20) opening into the bowl (3).

5. A saliva fixture as claimed in claim 3 or 4, characterised in that the support (19) for the drinking glass is arranged in the housing (1) so as to be slightly tilted and higher than the lowest upper edge of the bowl edge (17) and merges into a discharge surfaces (20) which opens into the bowl (3).

6. A saliva fixture as claimed in one of claims 3

to 5, characterised in that on the side facing the user the housing (1) has an overflow edge (17) which extends over the width of the housing and in the region of the bowl (3) forms the bowl edge and terminates toward the user in the outer wall (16) of the housing (1).

7. A saliva fixture as claimed in claim 6, characterised in that the housing (1) is rectangular in plan, and the corners are strongly rounded.

8. A saliva fixture as claimed in one of claims 3 to 7, characterised in that on the cover surface (2) of the housing (1) are arranged two holes (6) for plug-type inlet pipes (7, 8) in order on the one hand to rinse the bowl and on the other hand to fill the drinking glass.

**Revendications**

1. Dispositif formant crachoir de dentisterie comportant une cuvette, qui possède une surface formant fond (13) définie par un cône évasé et à laquelle se raccordent des parois latérales (9, 10), qui se terminent par un bord supérieur (2, 17) qui est situé dans un plan incliné vers le côté de l'utilisateur, et qui contient au niveau des parois latérales (9, 10), une arrivée d'eau de rinçage (7) et, du côté du fond, une ouverture d'évacuation (4) disposée au niveau de la pointe du cône et débouchant dans un canal d'évacuation, caractérisé par le fait que les parois latérales (9, 10) sont formées par un cylindre (1) disposé obliquement et dont l'axe (12) est incliné par rapport à la verticale de manière à s'écarter à l'opposé du côté de l'utilisateur et est disposé de manière à faire un angle aigu faible ($\alpha_2$) par rapport à l'axe du cône de la surface formant fond (13), et que les parois latérales (9, 10) se prolongent par une surface supérieure (2) formant le bord, en affleurant au niveau de cette surface.

2. Dispositif formant crachoir suivant la revendication 1, caractérisé par le fait que l'ouverture d'évacuation (4) est disposée d'une manière excentrée par rapport à la surface (13) constituant le fond de la cuvette et que l'arrivée d'eau de rinçage (7) est disposée en étant orientée tangentiellement et obliquement vers le bas, de préférence en faisant un angle de 30° par rapport à l'horizontale, sur le côté de la cuvette (3), qui est situé à l'opposé de la partie de la surface formant fond (13) possédant la largeur maximale.

3. Dispositif suivant la revendication 1 ou 2, caractérisé par le fait que la cuvette (3) est disposée en étant intégrée dans un boîtier (1) comportant une surface d'appui (19) pour un verre à dents.

4. Dispositif formant crachoir suivant la revendication 3, caractérisé par le fait que le boîtier (1) comporte des surfaces obliques d'écoulement (20) débouchant dans la cuvette (3).

5. Dispositif formant crachoir suivant la revendication 3 ou 4, caractérisé par le fait que la surface d'appui (19) pour le verre à dents dans le boîtier (1) est disposée en étant légèrement inclinée et surélevée par rapport à l'arête supérieure la plus basse du bord (17) de la cuvette et se prolonge par une surface d'écoulement (20) débouchant dans la cuvette (3).

6. Dispositif formant crachoir suivant l'une des revendications 3 à 5, caractérisé par le fait que le boîtier (1) comporte, sur le côté tourné vers l'utilisateur, un bord de trop-plein (17) s'étendant sur la largeur du boîtier et qui forme, au niveau de la cuvette (3), le bord de cette dernière, et se termine, sur le côté tourné vers l'utilisateur, par la paroi extérieure (16) du boîtier (1).

7. Dispositif formant crachoir suivant la revendication 6, caractérisé par le fait que le boîtier (1) possède un contour rectangulaire en projection horizontale et que les bords sont fortement arrondis.

8. Dispositif formant crachoir suivant l'une des revendications 3 à 7, caractérisé par le fait qu'il est prévu, dans la surface supérieure (2) du boîtier (1), deux perçages (6) pour des tubes d'admission enfichables (7, 8) d'une part pour le rinçage de la cuvette et d'autre part pour le remplissage du verre à dents.

FIG 1

FIG 2

0 097 977

FIG 3

FIG 4